# FASCICULE DE BREVET EUROPEEN

(11) **EP 3 983 725 B1**
(45) Date de publication et mention de la délivrance du brevet: **08.11.2023**
(21) Numéro de dépôt: 20742807.9
(22) Date de dépôt: 12.06.2020
(51) Int. Cl.: F23R 3/54, F01D 9/02, F23R 3/60

(54) **ENSEMBLE POUR UNE TURBINE À GAZ**
ANORDNUNG FÜR EINE GASTURBINE
ASSEMBLY FOR A GAS TURBINE

(30) Priorité: 13.06.2019 FR 1906282
(43) Date de publication de la demande: 20.04.2022
(73) Titulaire: SAFRAN, 75015 Paris (FR)
(72) Inventeur: RENAULT, Lionel, Victor, George, 77550 Moissy-Cramayel (FR); PLAINO, Cédric, Jean Daniel, 77550 Moissy-Cramayel (FR); BETBEDER- LAÜQUE, Xavier, Roger, 77550 Moissy-Cramayel (FR); OBERMANN, Guillaume, 77550 Moissy-Cramayel (FR); PEDARAZACQ, David, 77550 Moissy-Cramayel (FR)
(74) Mandataire: Ernest Gutmann - Yves Plasseraud S.A.S.
(86) Numéro de dépôt international: PCT/FR2020/051010
(87) Numéro de publication internationale: WO 2020/249915

(56) Documents cités:
- EP-A1- 2 947 296
- EP-A2- 2 613 084
- WO-A1-00/77348
- DE-A1- 2 356 722
- GB-A- 2 019 947
- GB-A- 2 036 888

## Description

### Domaine technique de l'invention

La présente divulgation concerne un ensemble pour turbine à gaz pour turbomachine, notamment pour un hélicoptère ou un avion.

### Etat de la technique antérieure

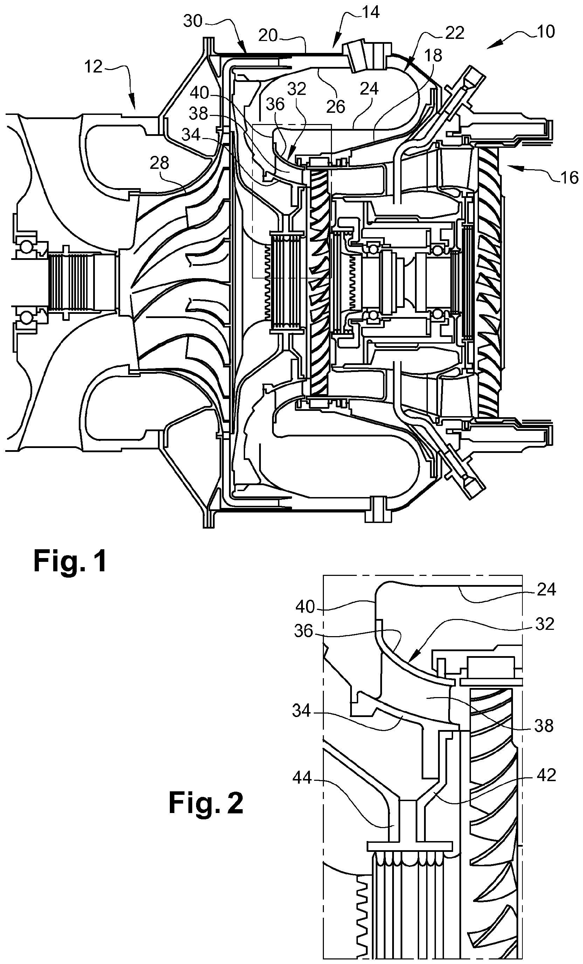

La figure 1 illustre une turbomachine 10 qui comporte, d'amont en aval dans le sens de circulation des gaz au sein de la turbomachine, un ou plusieurs étages de compresseurs 12, une chambre de combustion 14, un ou plusieurs étages de turbine 16, et un canal d'échappement des gaz.

La chambre de combustion 14 est délimitée par des carters de révolution interne 18 et externe 20 coaxiaux. Le carter externe 20 de la chambre 14 est fixé sur une enveloppe externe de la turbomachine, le carter interne 18 de la chambre pouvant être fixé sur une enveloppe interne ou relié au carter externe. La chambre de combustion 14 comprend par ailleurs un tube à flamme 22 ou foyer, qui est le siège de la combustion des gaz.

Comme représenté en figure 1, le tube à flamme 22 peut être à écoulement inversé et présenter une forme annulaire coudée permettant de renvoyer l'écoulement gazeux vers l'aval de la turbomachine, en direction de la turbine 16. L'écoulement des gaz se fait alors successivement de l'aval vers l'amont puis à nouveau vers l'aval de la chambre de combustion 14. Les injecteurs (non représentés) sont dans ce cas généralement montés au niveau d'une surface d'extrémité ou de tête du tube 22 à flamme. Ce tube à flamme 22 comprend une virole annulaire interne 24 et une virole annulaire externe 26.

Un tube à flamme 22 à écoulement inversé est notamment connu du document FR 2 996 289. Un tube à flamme 22 est généralement formé de plusieurs pièces obtenues à partir de tôles embouties, puis assemblées les unes aux autres. Ces pièces subissent par ailleurs des opérations d'usinage, notamment de perçage.

On observe également sur la figure 1 que le dernier étage du compresseur 12 comprend un rouet 28 centrifuge débouchant radialement vers l'extérieur dans un diffuseur annulaire 30 d'air dont une sortie alimente en air le tube 22 à flamme.

Egalement, la sortie de la chambre de combustion est reliée à un distributeur 32 comprenant une plateforme annulaire interne 34 et une plateforme annulaire externe 36 reliées l'une à l'autre à des pales 38 sensiblement radiales. La plateforme annulaire externe 36 est reliée à l'extrémité aval de la virole annulaire interne 24 par une partie annulaire coudée 40. Le distributeur 32 est supporté radialement vers l'intérieur par une pièce annulaire 42 fixée à son extrémité externe à la plateforme annulaire interne 34 et à son extrémité radialement interne à des brides annulaires 44 solidaires du diffuseur 30 annulaire d'air (figure 2).

En fonctionnement, on observe une dilatation thermique différentielle entre la plateforme annulaire externe 32 du diffuseur 30 ; qui est une partie du distributeur et qui est une pièce massive soumise à la température des gaz chauds et qui se dilate ; la partie coudée 40 et la virole annulaire interne 24 du tube à flamme 22. Ainsi, pour tenir compte de ce phénomène, on peut autoriser un déplacement radial de la partie coudée 40 relativement à l'extrémité amont de la plateforme annulaire externe 36 ou encore autoriser un coulissement longitudinal de l'extrémité aval de la virole annulaire interne 24 relativement à l'extrémité amont de la partie coudée 40. Toutefois, ce type de montage impose l'utilisation de plusieurs pièces distinctes et leur assemblage peut être délicat.

Egalement, la pièce annulaire 42 de support est plus froide que le distributeur 32 de sorte qu'elle se dilate moins que le distributeur 32. Pour tenir compte de cet écart de dilation thermique, la pièce annulaire 42 est fixée avec un jeu annulaire radial à la plateforme annulaire interne 34. Là encore, la même difficulté que précédemment existe de sorte que le montage peut s'avérer compliqué.

Le document WO0077348A décrit un dispositif pour turbine à gaz selon l'état de la technique.

L'invention exposée ci-après propose une solution permettant de résoudre les problèmes précités tout en étant simple et économique à mettre en oeuvre.

### Résumé de l'invention

A cette fin, il est proposé un ensemble pour turbine à gaz selon l'objet de la revendication 1.

Ainsi, la partie annulaire coudée formée d'une seule pièce avec une plateforme du distributeur permet de découpler les déplacements radiaux entre le distributeur qui est chaud et la partie annulaire coudée qui est plus froide.

L'utilisation de partie annulaire coudée permet d'avoir un ajustement élastique des dilatations thermiques différentielles.

Selon l'invention, ladite partie annulaire coudée comprend une portion annulaire courbée reliée à une paroi annulaire radialement interne et à une paroi annulaire externe. Ces parois annulaires interne et externe peuvent être sensiblement parallèles l'une à l'autre et peuvent être sensiblement cylindriques.

La portion annulaire courbée peut présenter une épaisseur supérieure à l'épaisseur de la paroi annulaire interne et à l'épaisseur de la paroi annulaire externe. De cette manière, les parois annulaire interne et externe présentent un plus grand gradient thermique que la portion annulaire courbée, ce qui permet de concentrer les gradients thermiques dans les parois cylindriques, lesquelles sont plus à même d'accepter ces gradients sans générer de contraintes excessives. Cette conformation à portion annulaire courbée plus épaisse peut être réalisée aussi bien au niveau de la plateforme annulaire interne que la plateforme annulaire externe ou bien encore au niveau des deux plateformes interne et externe.

La portion annulaire coudée peut présenter un rayon sensiblement constant. Ladite portion annulaire est orientée vers l'aval, l'extrémité amont de la paroi annulaire interne étant reliée à la plateforme annulaire externe et l'extrémité annulaire amont de la paroi annulaire externe étant reliée à l'extrémité aval d'une virole annulaire du tube à flamme, qui peut être un tube à flamme à écoulement inversé.

L'extrémité amont de la paroi annulaire externe peut être reliée à une paroi annulaire radiale s'étendant radialement vers l'intérieur et agencée avec un jeu annulaire en vis-à-vis axial de l'extrémité annulaire amont de la paroi annulaire interne. Cette paroi annulaire radiale permet de limiter les réintroductions d'air dans la cavité annulaire formée entre les deux parois annulaires interne et externe.

Lorsque la plateforme annulaire interne est reliée à une partie annulaire coudée, ladite portion annulaire peut être orientée vers l'amont, l'extrémité aval de la paroi annulaire externe étant reliée à la plateforme annulaire interne et l'extrémité aval de la paroi annulaire interne est reliée à une bride annulaire de fixation à une partie annulaire statorique. Une paroi annulaire radiale de limitation des réintroductions d'air dans la cavité annulaire peut également être prévue. Ladite partie annulaire statorique peut comprendre un diffuseur annulaire agencé en sortie d'un rouet centrifuge.

L'invention sera mieux comprise et d'autres détails, caractéristiques et avantages de l'invention apparaîtront à la lecture de la description suivante faite à titre d'exemple non limitatif en référence aux dessins annexés.

### Brève description des figures

[Fig. 1], déjà décrite précédemment, est une vue schématique en coupe d'une turbine à gaz d'un type connu,
[Fig. 2], déjà décrite précédemment, est une vue à plus grande échelle de la zone délimitée en pointillés sur la figure 1,
[Fig. 3], est une vue schématique, d'un premier mode de réalisation selon la présente divulgation,
[Fig. 4], est une vue schématique d'un second mode de réalisation ne faisant pas partie de l'invention telle que définie par les revendications.

### Description détaillée

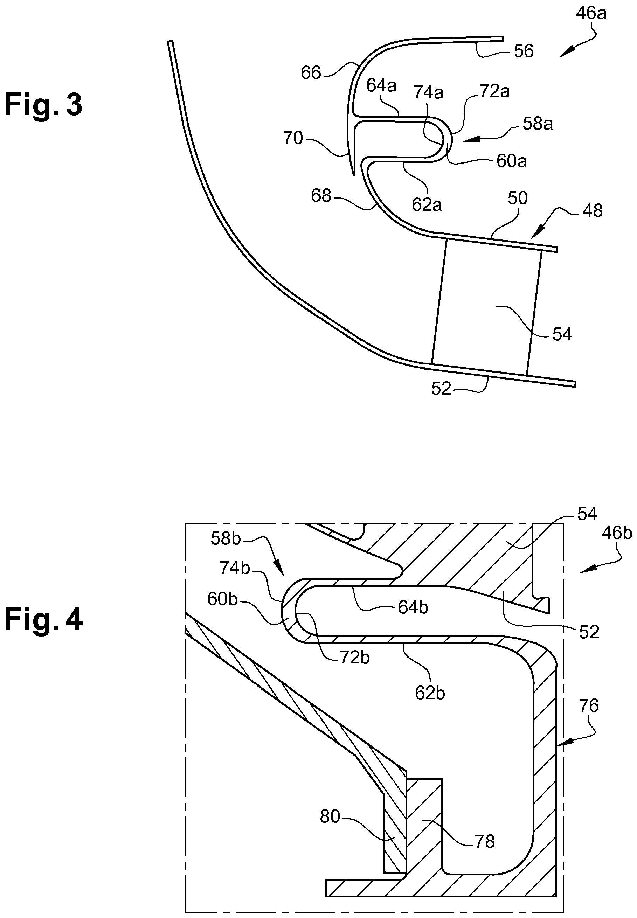

Bien que non représenté sur les figures, le mode de réalisation de la figure 3 peut être combiné avec le mode de réalisation de la figure 4 au sein d'un distributeur d'une turbine à gaz.

La figure 3 représente un ensemble 46a comprenant un distributeur 48 comprenant une plateforme annulaire externe 50 et une plateforme annulaire interne 52 reliées l'une à l'autre par des pales 54 sensiblement radiales. L'extrémité amont de la plateforme annulaire externe 50 est reliée à l'extrémité aval d'une virole annulaire 56 du tube à flamme à écoulement inversé par l'intermédiaire d'une partie annulaire coudée 58a.

Cette partie annulaire coudée 58a comprend une portion annulaire coudée 60a pouvant présenter une forme sensiblement en arc de cercle avec un rayon de courbure sensiblement constant. Cette portion annulaire courbée 60a est reliée à une première extrémité à une paroi annulaire interne 62a s'étendant vers l'amont et à une seconde extrémité à une paroi annulaire externe 64a s'étendant également vers l'amont. La paroi annulaire interne 62a est reliée à la plateforme annulaire externe par une portion annulaire interne 66 incurvée et la paroi annulaire externe 64a est reliée à l'extrémité aval de la virole annulaire interne 56 du tube à flamme par une portion de paroi annulaire externe 68 incurvée.

Comme on peut le voir sur la figure 3, l'extrémité amont de la paroi annulaire externe 64a peut également être reliée à une paroi annulaire radiale 70 s'étendant radialement vers l'intérieur. L'extrémité radialement interne de la paroi annulaire radiale 70 peut être agencée en vis-à-vis axial de l'extrémité amont de la paroi annulaire interne 62a. Ce jeu axial peut être de l'ordre du millimètre. Le jeu axial permet de reconstituer une surface d'écoulement du flux de gaz chauds sortant du tube à flamme et évite les introductions de gaz chauds dans la cavité annulaire formée entre la paroi annulaire interne 62a et la paroi annulaire externe 64a. Comme cela est visible sur la figure 3, la portion annulaire courbée 60a est orientée vers l'aval. La portion annulaire comprend une surface annulaire aval 72a et une surface annulaire amont 74a, la surface annulaire amont 72a est concave et la surface annulaire aval 74a est convexe. La formation d'une seule pièce et par exemple par fabrication additive du distributeur 48 et de la partie annulaire courbée 58a permet de simplifier l'assemblage tout en conservant une dilatation thermique différentielle entre le distributeur 48 qui est soumis à la température des gaz chauds et la partie annulaire 58a courbée qui subit une température moins importante. La partie annulaire 58a courbée permet de donner de la souplesse en direction radiale à cette zone autorisant ainsi les dilatation thermiques différentielles.

Dans l' ensemble 46b représenté en figure 4, la partie annulaire courbée 58b comprend une portion annulaire 60b courbée reliée à une paroi annulaire interne 62b et à une paroi annulaire externe 62b. La paroi annulaire externe 64b est reliée à son extrémité amont à la portion annulaire courbée et à son extrémité aval à la face radialement interne de la plateforme annulaire interne 52. La paroi annulaire interne 62b est reliée à son extrémité amont à la portion annulaire courbée 60b et à son extrémité aval à une paroi annulaire radiale 76 portant à son extrémité radialement interne une bride annulaire 78 de fixation sur une bride annulaire 80 solidaire du diffuseur annulaire d'air. La portion annulaire courbée 60a est orientée vers l'amont. La portion annulaire courbée 60b comprend une surface annulaire 72b aval et une surface annulaire 74b amont, la surface annulaire 74b amont est convexe et la surface annulaire 72b aval est concave.

La formation de la partie annulaire coudée 58b d'une seule pièce ave le distributeur 48 permet de relier le distributeur par une zone de souplesse à une partie annulaire statorique, c'est-à-dire le diffuseur annulaire.

Dans l'une et/ou l'autre des réalisations représentées aux figures 3 et 4, la paroi annulaire interne 62a, 62b et la paroi annulaire externe 64a, 64b peuvent être parallèles et peuvent être cylindriques. Par ailleurs, la paroi annulaire interne 62a, 62b et la paroi annulaire externe 64a, 64b peuvent présenter une épaisseur inférieure à l'épaisseur de la portion annulaire courbée 60a, 60b de manière à ce que le gradient thermique soit principalement concentré au niveau des parois annulaires interne 62a, 62b et externe 64a, 64b.

## Revendications

1. Ensemble (46a, 46b) pour turbine à gaz comportant un tube à flamme et un distributeur comportant des pales (54) radiales reliées à leurs extrémités radialement internes à une plateforme annulaire interne (52) et à leurs extrémités radialement externes à une plateforme annulaire externe, dans lequel la plateforme annulaire externe (50) est reliée à une partie annulaire coudée (58a) formée d'une seule pièce avec la plateforme annulaire (50) à laquelle elle est reliée, **caractérisée en ce que** ladite partie annulaire coudée (58a) comprend une portion annulaire (60a) reliée à une paroi annulaire radialement interne (62a) et à une paroi radialement externe (64a, 64b), la plateforme annulaire externe (50) étant reliée à une portion annulaire coudée (60a), ladite portion annulaire coudée (60a) étant orientée vers l'aval, l'extrémité amont de la paroi annulaire interne (62a) étant reliée à la plateforme annulaire externe (50) et l'extrémité annulaire amont de la paroi annulaire externe (50) étant reliée à l'extrémité aval d'une virole annulaire (56) du tube à flamme.

2. Ensemble selon la revendication 1, dans lequel la paroi annulaire interne (62a, 62b) et la paroi annulaire externe (64a, 64b) sont sensiblement parallèles l'une à l'autre, et sont par exemple sensiblement cylindriques.

3. Ensemble selon la revendication 1 ou 2, dans lequel la portion annulaire courbée (60a, 60b) présente une épaisseur supérieure à l'épaisseur de la paroi annulaire interne (62a, 62b) et à l'épaisseur de la paroi annulaire externe (64a, 64b).

4. Ensemble selon l'une des revendications 1 à 3, dans lequel la portion annulaire coudée (60a, 60b) présente un rayon sensiblement constant.

5. Ensemble selon l'une des revendications 1 à 4, dans lequel l'extrémité amont de la paroi annulaire externe (64a) est reliée à une paroi annulaire radiale (70) s'étendant radialement vers l'intérieur et agencée avec un jeu annulaire en vis-à-vis axial de l'extrémité annulaire amont de la paroi annulaire interne (62a).

6. Ensemble selon l'une des revendications 1 à 5, dans lequel le tube à flamme est à écoulement inversé.

7. Ensemble selon l'une des revendications 1 à 4 dans lequel, la plateforme annulaire interne (50) est reliée à une partie annulaire coudée (60b) comprenant une portion annulaire orientée vers l'amont, une paroi annulaire externe (64b) dont l'extrémité aval est reliée à la plateforme annulaire interne et une paroi annulaire interne (62b) dont l'extrémité aval est reliée à une bride annulaire (78) de fixation à une partie annulaire statorique.

8. Ensemble selon la revendication 7, dans lequel ladite partie annulaire statorique comprend un diffuseur annulaire agencée en sortie d'un rouet centrifuge.

## Patentansprüche

1. Anordnung (46a, 46b) für eine Gasturbine, enthaltend ein Flammrohr und einen Leitapparat mit radial verlaufenden Schaufeln (54), die an ihren radial inneren Enden mit einer inneren ringförmigen Plattform (52) und an ihren radial äußeren Enden mit einer äußeren ringförmigen Plattform verbunden sind, wobei die äußere ringförmige Plattform (50) mit einem gekrümmten ringförmigen Teil (58a) verbunden ist, der einstückig mit der ringförmigen Plattform (50), mit der er verbunden ist, ausgebildet ist,
**dadurch gekennzeichnet, dass** der gekrümmte ringförmige Teil (58a) einen ringförmigen Abschnitt (60a) umfasst, der mit einer radial inneren ringförmigen Wand (62a) und einer radial äußeren Wand (64a, 64b) verbunden ist, wobei die äußere ringförmige Plattform (50) mit einem gekrümmten ringförmigen Abschnitt (60a) verbunden ist, wobei der gekrümmte ringförmige Abschnitt (60a) in Richtung stromabwärts gerichtet ist, wobei das stromaufwärts gelegene Ende der inneren ringförmigen Wand (62a) mit der äußeren ringförmigen Plattform (50) verbunden ist und das stromaufwärts gelegene ringförmige Ende der äußeren ringförmigen Wand (50) mit dem stromabwärts gelegenen Ende eines Mantelrings (56) des Flammrohrs verbunden ist.

2. Anordnung nach Anspruch 1,
wobei die innere ringförmige Wand (62a, 62b) und die äußere ringförmige Wand (64a, 64b) im Wesentlichen parallel zueinander verlaufen und beispielsweise im Wesentlichen zylindrisch sind.

3. Anordnung nach Anspruch 1 oder 2,
wobei der gekrümmte ringförmige Abschnitt (60a, 60b) eine Dicke aufweist, die größer ist als die Dicke der inneren ringförmigen Wand (62a, 62b) und die Dicke der äußeren ringförmigen Wand (64a, 64b).

4. Anordnung nach einem der Ansprüche 1 bis 3,
wobei der gekrümmte ringförmige Abschnitt (60a, 60b) einen im Wesentlichen konstanten Radius aufweist.

5. Anordnung nach einem der Ansprüche 1 bis 4,
wobei das stromaufwärts gelegene Ende der äußeren ringförmigen Wand (64a) mit einer radialen ringförmigen Wand (70) verbunden ist, die sich radial nach innen erstreckt und mit einem ringförmigen Spiel in axialer Gegenüberstellung zum stromaufwärts gelegenen ringförmigen Ende der inneren ringförmigen Wand (62a) angeordnet ist.

6. Anordnung nach einem der Ansprüche 1 bis 5,
wobei das Flammrohr eine umgekehrte Strömung aufweist.

7. Anordnung nach einem der Ansprüche 1 bis 4,
wobei die innere ringförmige Plattform (50) mit einem gekrümmten ringförmigen Teil (60b) verbunden ist, der einen in Richtung stromaufwärts gerichteten ringförmigen Abschnitt, eine äußere ringförmige Wand (64b), deren stromabwärts gelegenes Ende mit der inneren ringförmigen Plattform verbunden ist, und eine innere ringförmige Wand (62b) aufweist, deren stromabwärts gelegenes Ende mit einem ringförmigen Flansch (78) zum Befestigen an einen ringförmigen Statorteil verbunden ist.

8. Anordnung nach Anspruch 7,
wobei der ringförmige Statorteil einen ringförmigen Diffusor umfasst, der am Auslass eines Schleuderrads angeordnet ist.

## Claims

1. A gas turbine nozzle assembly (46a, 46b) having a flame tube and radial blades (54) connected at radially inner ends to an inner annular platform (52) and at radially outer ends to an outer annular platform, wherein the outer annular platform (50) is connected to a bent annular part (58a) formed integrally with the annular platform (50) to which it is connected, **characterized in that** the said bent annular part (58a) comprises a curved annular part (60a) connected to a radially inner annular wall (62a) and to a downstream annular wall (64a, 64b), the outer annular platform (50) being connected to a bent annular part (60a), the said bent annular part (60a) faces downstream, the upstream end of the inner annular wall (62a) being connected to the outer annular platform (50) and the upstream annular end of the outer annular wall (50) being connected to the downstream end of an annular shroud (56) of the flame tube.

2. The assembly according to claim 1, wherein the inner annular wall (62a, 62b) and the outer annular wall (64a, 64b) are substantially parallel to each other, and are for example substantially cylindrical.

3. The assembly according to claim 1 or 2, wherein the curved annular part (60a, 60b) has a thickness greater than the thickness of the inner annular wall (62a, 62b) and the thickness of the outer annular wall (64a, 64b).

4. The assembly according to any of claims 1 to 3, wherein the bent annular part (60a, 60b) has a substantially constant radius.

5. The assembly according to any of claims 1 to 4, wherein the upstream end of the outer annular wall (64a) is connected to a radially inwardly extending annular wall (70) arranged with an annular clearance axially opposite the upstream annular end of the inner annular wall (62a).

6. The assembly according to claim 1 to 5, wherein the flame tube is reverse flow.

7. The assembly according to any of claims 1 to 4 wherein, the inner annular platform (50) is connected to a bent annular part (60b) comprising an annular part facing upstream, an outer annular wall (64b) whose downstream end is connected to the inner annular platform and an inner annular wall (62b) whose downstream end is connected to an annular flange (78) for attachment to a stator annular part..

8. The assembly according to claim 7, wherein the said annular stator part comprises an annular diffuser arranged at the outlet of a centrifugal impeller.
